Europäisches Patentamt

European Patent Office

Office européen des brevets

(19)

(11) **EP 1 298 932 A2**

(12) **EUROPEAN PATENT APPLICATION**

(43) Date of publication:
**02.04.2003 Bulletin 2003/14**

(51) Int Cl.[7]: **H04N 7/26**

(21) Application number: **02020945.8**

(22) Date of filing: **19.09.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **19.09.2001 US 957292**

(71) Applicant: **Amphion Semiconductor Limited
Belfast BT9 5BS (GB)**

(72) Inventors:
• **McCanny, John Vincent
County Down BT23 7UF (GB)**
• **McCanny, Paul Gerard
County Tyrone BT82 9PY (GB)**
• **Masud, Shahid
County Down BT8 QD (GB)**

(74) Representative: **Wallace, Alan
F. R. Kelly & Co.
9 University Street
Belfast BT7 1FY (GB)**

(54) **Architecture component and method for performing discrete wavelet transforms**

(57)      An architecture component an a method for use in performing a 2-dimensional discrete wavelet transform of 2-dimensional input data is disclosed. The architecture component comprises a memory unit for receiving the input signal row-by-row, a column processing unit for processing coefficients stored in the memory unit, and a row processor for processing coefficients output by the column processor and a serial processor for processing further octaves. The parallel processor is operative to process in parallel coefficients previously derived from one row of input data by the serial processor.

Fig 1

EP 1 298 932 A2

**Description**

This invention relates to an architecture component for performing discrete wavelet transforms.

There has been a growing interest in the use of discrete wavelet transforms (DWT). This increase has, in part, been brought about by adoption of the transform in the JPEG2000 standard for still and moving image coding and compression set out by the Joint Picture Experts Group, which, it is intended, will be standardised by the International Standards Organization in International Standard, IS 15444 Part 1. Central to the JPEG2000 standard is the use of a separable 2-dimensional DWT that use biorthogonal 9,7 and 5,3 filter pairs to perform, respectively, irreversible and reversible compression.

Moreover, wavelet analysis finds other applications for several reasons. One of these reasons is that it can be performed over a part of an original signal that is limited in time. The time over which the analysis operates can be varied simply by making relatively small changes to the analysis procedure. This allows the analysis to be tuned to give results that are more accurate in either their resolution in frequency or in time, as best suits the objective of the analysis (although, it should be noted, that an increase in accuracy in one domain will inevitably result in a decrease in accuracy in the other).

A two-dimensional wavelet transform can be implemented either as a non-separable or as a separable transform. The former type of transform cannot be factorised into Cartesian products. In contrast, a separable transform can be implemented by performing a 1-dimensional transform along one axis before computing the wavelet transform of the coefficients along an orthogonal axis. The separable implementation is therefore the more commonly used implementation of a 2-dimensional transform because it is an inherently efficient implementation and allows use of existing 1-dimensional architectures.

There is, therefore, a demand for design methodologies that can implement a separable 2-dimensional DWT in VLSI hardware efficiently both in terms of performance and complexity, for example, as a DSP core.

Hitherto, several systems for implementing separable 2-dimensional DWTs have been proposed. A simple system uses a serial processor that computes the transform for all rows of an $N \times N$ data set and stores the result in a storage unit of size $N \times N$. Once all of the rows have been processed, the same processor calculates the DWT of all of the columns. Such an architecture computes the 2-dimensional transform in $O(2N^2)$ cycles.

Extensions to this simple architecture have been proposed, which have a reduced storage requirement as a trade-off against use of additional processors. These architectures have the capability of calculating a 2-dimensional transform in $O(N + N^2)$ cycles. In terms of their computational performance, the most advantageous of such architectures are based on RPA.

In order that this invention can be better understood, known procedures for calculating a multilevel DWT in one dimension at various different resolutions will be reviewed.

One approach is to calculate the wavelet transform for the entire set of input data, and store the outputs when calculation has completed for each resolution level or octave. The low-pass outputs from each level of computation are then used as the inputs for the next octave. This approach is straightforward to implement, but requires a large amount of storage capacity for intermediate results.

An alternative approach is to interlace computation of the various octaves. This avoids the need to wait for the results calculated coefficients of one octave before calculation of the next octave can be started, with a consequent saving in processing time and memory requirements. The algorithm known as the Recursive Pyramid Algorithm (RPA) can compute coefficients as soon as the input data is available to be processed.

In two dimensions, a modified version of the 1-dimensional RPA algorithm may be used to produce an algorithm that is efficient in its use of processing cycles. However, this introduces a delay in the timing of the outputs of the transform. This means that the scheduling that must take place to implement such algorithms is complex. Moreover, many such architectures incorporate multiple components, which, because of interlacing, are active for only a proportion (e.g. 50%) of time during calculation of the transform. A consequence of this is that the hardware required to implement these algorithms is typically complex, costly and difficult to implement.

An aim of this invention is to provide an efficient implementation of a 2-dimensional, separable wavelet transform that has a wide range of application including, in particular, JPEG2000 coding applications, while reducing one or more of the memory requirements, complexity and inefficiency of hardware use of known architectures.

From a first aspect, this invention provides an architecture component for use in performing a 2-dimensional discrete wavelet transform of 2-dimensional input data, the component comprising a memory for receiving the input signal row-by-row, a column processor for receiving output coefficients from the memory, a row processor for processing coefficients stored in the memory, in which the row processor is operative to process in parallel coefficients previously derived from one row of input data by the column processor.

The input data is, therefore, scanned along each row in turn, essentially in a raster-like scan. This can be implemented without the timing complexities associated with RPA, which results in an advantageously simple hardware configuration. In one dimension, it is not essential and therefore generally not practical to store all of the coefficients for one level before going on to the next, since this would require provision of a large amount of additional memory. However, storage of calculated coefficients is a requirement in 2-D separable systems, so the memory used to store these intermediate results is not an overhead; it is an essential. Therefore, in this invention, the coefficients of an entire row are generated, ordered and processed before the next row is processed. This can provide an architecture that has advantageously simplified timing and configuration in general. This architecture can be thought of as combining advantageous features of each of the above proposals.

Typically, the memory is configured to order coefficients stored in it into an order suitable for processing by the column processor.

The column processor may generate both low-pass and high-pass filter output coefficients. The memory above is capable of storing the input coefficients and presenting them to the column processor, which may generate both low-pass and high pass filter output coefficients. In such cases, the row processor may be operative to process combinations of the output coefficients in successive processing cycles.

The memory may be configured to process coefficients contained in it in a manner that differs in dependence upon whether the coefficients are derived from an odd-numbered or an even-numbered row in the input data. The row processor, the column processor and the memory elements are typically driven by a clock. The same clock may advantageously drive all of these components.

In order to ameliorate the errors introduced into the transform by an abrupt start and end of the input signal (so-called "edge effects"), the data is most typically extended. In some embodiments, the data is extended at its borders by symmetric extension. Alternatively, the data may be extended at its borders by zero padding. Extension of the data may be performed in a memory unit of the architecture or within a delay line router component of the architecture.

In an architecture component embodying the invention, the row processor is advantageously configured to process data at substantially the same rate as data is output by the column processor. This ensures that use of the processing capacity of both processors is maximised. Both processors may be configured to process one input every clock cycle and produce an output every clock cycle. The output of both processors alternates between computing a high-pass output coefficient and a low-pass output coefficient. This can ensure that no data is processed that might subsequently be lost through decimation.

An architecture component embodying the invention may further comprise a third parallel processor. The third parallel processor operates to process output from the column parallel processor to generate one or more further octaves of the DWT. Only a proportion ($\sim$25%) of coefficients produced by the column processor are processed by the third parallel processor.

An architecture component embodying the invention may be a component in a system for performing image processing according to the JPEG2000 standard.

From a second aspect, the invention provides a method of performing a 2-dimensional discrete wavelet transform comprising processing data items in a row of data in a serial processor to generate a plurality of output coefficients, storing the output coefficients, and processing the stored coefficients in a parallel processor to generate the transform coefficients.

A method according to this aspect of the invention typically further includes reordering the coefficients before input to each processor. It may also include extending the data at its borders in the memory device. Such extension may be done by way of either one of zero padding or symmetric extension.

A method according to this aspect of the invention may be part of a method of encoding or decoding an image according to the JPEG 2000 standard.

The architecture component of the first aspect of the invention may be implemented in a number of conventional ways, for example as an Application Specific Integrated Circuit (ASIC) or a Field Programmable Gate Array (FPGA). The implementation process may also be one of many conventional design methods including standard cell design or schematic entry/layout synthesis. Alternatively, the apparatus may be described, or defined, using a hardware description language (HDL) such as VHDL, Verilog HDL or a targeted netlist format (e.g. xnf, EDIF or the like) recorded in an electronic file, or computer useable file.

Thus, a third aspect of the invention provides a computer program, or computer program product, comprising program instructions, or computer usable instructions, arranged to generate, in whole or in part, an architecture component according to the first aspect of the invention. The apparatus may be implemented as a set of suitable such computer programs. Typically, the computer program comprises computer usable statements or instructions written in a hardware description, or definition, language (HDL) such as VHDL, Verilog HDL or a targeted netlist format (e.g. xnf, EDIF or the like) and recorded in an electronic or computer usable file which, when synthesised on appropriate hardware synthesis tools, generates semiconductor chip data, such as mask definitions or other chip design information, for generating a semiconductor chip. The invention also provides said computer program stored on a computer useable medium. The invention further provides semiconductor chip data, stored on a computer usable medium, arranged to generate, in whole or in part, an apparatus according to the first aspect of the invention.

A fourth aspect of the invention provides a computer program product comprising computer useable instructions for causing a computer to perform the method according to the second aspect of the invention.

Other advantageous aspects of the invention will be apparent to those ordinarily skilled in the art upon review of the following description of specific embodiments and with reference to the accompanying drawings.

An embodiment will now be described in detail, by way of example, and with reference to the accompanying drawings, in which:

Figure 1 is a block diagram of an architecture component of a first embodiment of the invention;

Figure 2 is a block diagram on a memory unit of the embodiment of Figure 1;

Figure 3 is a graph illustrating processor utilisation of the embodiment of Figure 1 at various resolution levels;

Figure 4 is a block diagram of a parallel processor being a component of the embodiment of Figure 1; and

Figure 5 is a block diagram of an architecture component of a second embodiment of the invention.

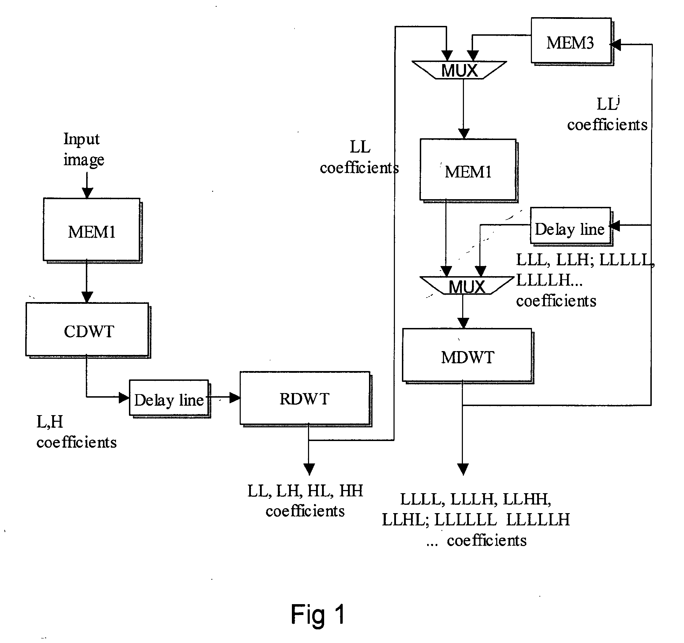

With reference to Figure 1, there is shown the basic components of a circuit embodying the invention. This embodiment is intended to process a 2-dimensional array of data, such as an image, of size $N \times M$.

The embodiment comprises row and column parallel processors RDWT, CDWT, a first and second memory unit MEM1, MEM2 a multiplexor MUX and a third parallel processor MDWT. Each of these components is controlled by a common clock.

The first memory unit MEM1, consists of ($L$ - 1) blocks of RAM, each holding $N$ samples, and receives data from an $N \times M$ input matrix in row order, receiving one value at each clock cycle. This memory unit transposes the coefficients from row-major order to column-major order. The transposed coefficients are input to the column parallel processor CDWT, which produces an output every clock cycle. During processing of odd rows a low-pass coefficient L is produced and during processing of even rows a high-pass coefficient H is produced. The row parallel processor RDWT also produces an output every clock cycle and operates on the output low and high pass coefficients produced by the column parallel processor CDWT. During processing of odd-cycles the low-pass DWT is computed to produce the LL and HL coefficients. During processing of even cycles the row parallel processor RDWT computes the high pass DWT of the L and H input coefficients to produce the LH and HH coefficients. In this way the LL, LH, HL and HH DWT combinations are produced.

Where an analysis of more than one resolution, j, is required, the LL output combination is fed back to the third parallel processor MDWT. This processor is responsible for the computation of all octaves except for the first. This processor receives an input from the parallel processor every other cycle during processing of odd rows. This coefficient is input to the memory unit, MEM2, which stores L-1 rows of $LL^j$ coefficients (where $LL^j$ is the lowpass (LL) output of the j$^{th}$ octave) and therefore needs to be able to store

$$\sum_{j=2}^{J}(L-1)\, N \Big/ 2^{j-1}$$

coefficients. MEM2 transposes the coefficients from row major order to column major order. The transposed coefficients are input to the parallel processor MDWT, where the column DWT is generated. Depending on whether an even or odd row is being processed, this processor will produce a low $(LL^{j-1})L$ or high $(LL^{j-1})H$ pass coefficient. The coefficients output are stored in a delay line, which consists of $L$ registers. The delay propagates a coefficient along one place along each clock cycle and is used as a temporary buffer between column and row DWT computations. The DWT coefficients are then input to the parallel processor MDWT and the row DWT is computed. Again, depending on whether it is an even position or an odd position either a low-pass or high pass coefficient is generated. In this way the $(LL^{j-1})$ LL, $(LL^{j-1})$LH, $(LL^{j-1})$HL and $(LL^{j-1})$HH coefficients are generated. A Row buffer, MEM3, of size $N$/2 coefficients is used to store the coefficients before the computation. During processing of octaves greater than two the LL coefficients are stored in MEM3. When processing of the current octave is finished the coefficients stored in MEM3 may be routed to the MDWT parallel processor where the column and row DWT can be computed.

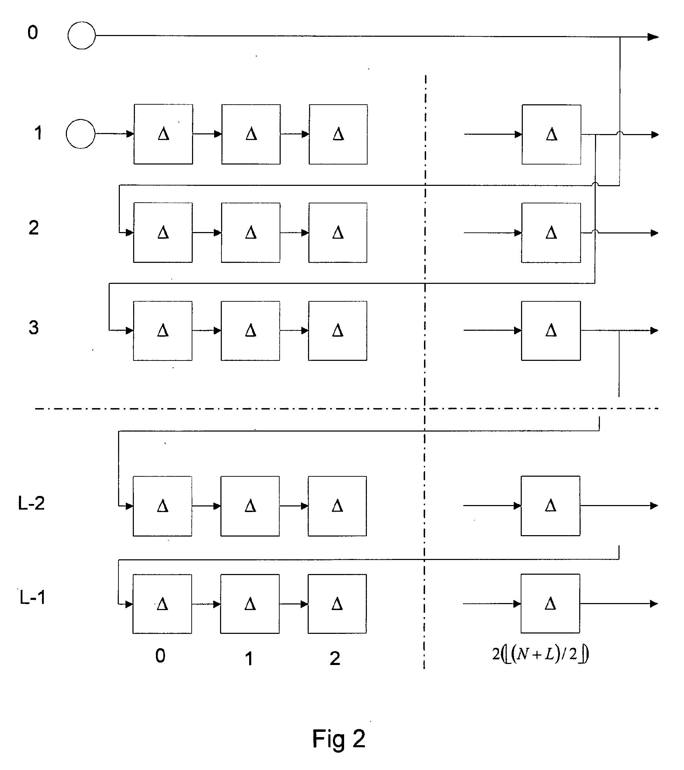

The memory unit MEM1 is used to store the coefficients input to the column parallel processor CDWT. As shown in Figure 2, it can comprise of registers, each represented as a box, labelled $\Delta$ in Figure 2, alternatively the structure may be constructed from L-1 units of RAM. The structure in Figure 2 is suitable for use when using zero-padding, as described below.

As is well known, the wavelet transform process involves decimation by two of the data in each dimension.

In order to achieve optimisation in the calculation of the wavelet transform, the arrangement by which each of the registers within the memory unit MEM1 is clocked depends on whether an odd-numbered or even numbered row is being input into the memory unit. Specifically, if a coefficient is placed in an even-numbered row of the memory, it will always be input to the column parallel processor CDWT in an even-numbered position. Therefore, instead of propagating a coefficient through all rows in the memory, a coefficient that starts in an even-numbered row is propagated only through the even-number rows, and likewise coefficients that start in odd-numbered rows are only propagated through other odd-number rows. During processing of even-numbered rows, only the second row of the memory unit is clocked, while all rows are clock during processing of odd-numbered rows.

The second memory unit MEM2 comprises several independently controlled registers. In the second memory unit, all rows comprise $2(\lfloor (Nj + L)/2 \rfloor)$ registers, where $Nj$ is the number of coefficients input to level $j$ of the DWT. The registers of the second memory unit in this embodiment are clocked in a manner similar to those of the first memory unit MEM1. However, this is the case only where the wavelet transform is zero-padded, and not where it is symmetrically extended. In this embodiment, a register file is used so the coefficients are propagated through each register along every other row.

The memory units and associated control circuitry are designed such that each memory unit is clocked only when there is data available to store and when there are coefficient derived from sufficient rows to compute the DWT along the columns.

In a first embodiment, borders are handled using zero padding. Zero padding is implemented along the rows by holding the first register in the delay line to logic 0 for $L$ - 1 cycles. Along the columns, zero padding is implemented by holding the first two rows of the transposing memory to logic '0' for $L$ - 1 rows.

It should be noted that the zero padding may have an adverse effect on the time taken to complete a multi-level DWT. When processing, for example, small images with reasonably long filter lengths, the number of resolution levels required may necessitate the stalling of the first column processor CDWT for a number of cycles. This is because zero padding extends the image by $L$ - 1 samples for each resolution level applied. This can produce a backlog in coefficients computed by the row and multi-resolution processor, RDWT and MDWT respectively, which must be processed before the column processor CDWT can proceed. Nevertheless, it has been found that the efficiency of an architecture embodying the invention is still higher than that of known systems. This architecture also allows the complexity of the controller to handle such borders to be minimised. But the length of time that the processors are stalled can be minimised by using a non-expansive transform to deal with these continuities (e.g. symmetric extension, as described above).

When described mathematically, a DWT assumes that the input data is of infinite extent. This is, of course, not the case in a practical embodiment, where the data is finite and has borders. There are two main ways in which borders can be accommodated within a practical implementation of a DWT, these being referred to a symmetrical extension and zero padding.

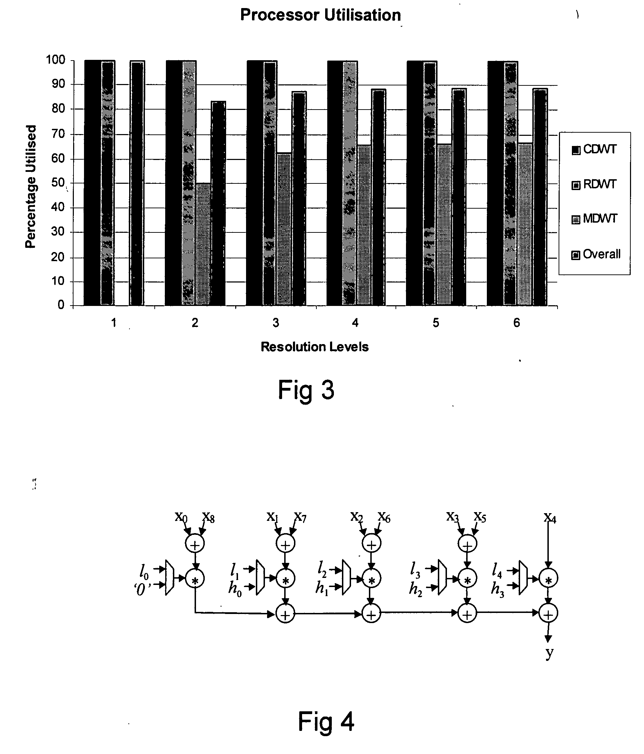

As is shown in Figure 4, the first resolution row and column parallel processors are 100% utilised regardless of resolution levels required. For computation of the first resolution only, the multi-resolution parallel processor is not required and therefore not included in the overall utilisation calculation. For computation of more than one octave of the DWT, the multi-resolution processor is required, its utilisation is given by the third column in each section.

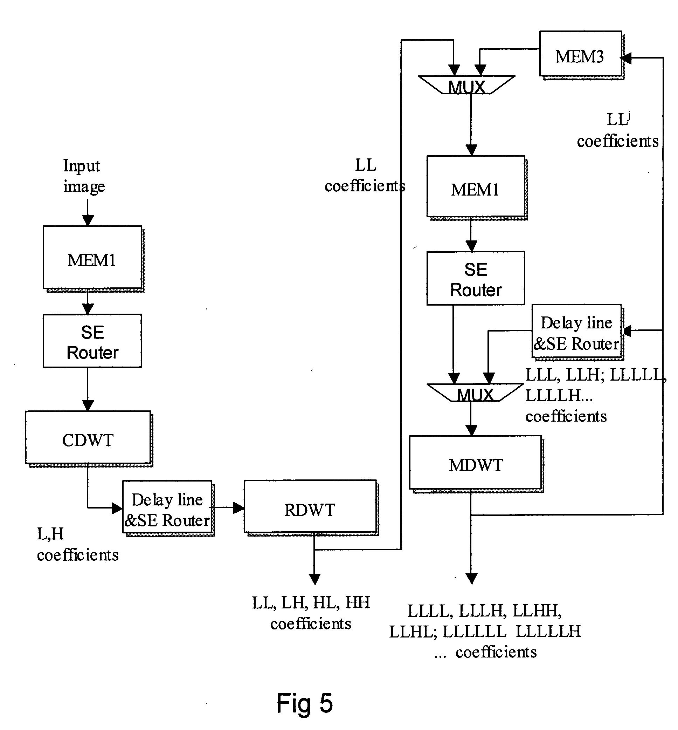

A second example uses symmetrical extension, as shown in Figure 5. This is a particularly topical example because of the inclusion of this transform in most implementations of the JPEG2000 standard. The circuit, as shown in Figure 4, is essentially the same as that shown in Figure 1. To implement symmetrical extension, delay line routers are provided on both delay lines in the structure to symmetrically extend the row data. Further routers are also provided on the output of the memory units MEM1, MEM2. This routing enables the symmetric extension at the borders of the input image. Also note that this embodiment uses RAM in place of a register file in the memory units MEM1, MEM2 and MEM3 therefore an address generator is also provided for each memory unit. This embodiment unit uses a RAM in which the coefficients propagate down every row. Because the coefficients do not have to propagate along every position in each row there is a significant decrease in power consumption.

A simple counter circuit counts the number of rows and columns processed within the input data. The counter circuit provides an input to the routers that determines how the routers direct the data. In particular, this information is used by the router to identify the start and end of each row and column. The input coefficients are stored in delay line. After the $L/2$ coefficient is input at the start of each row, the counter generates an output signal SOR. While the start of row SOR signal is present, the delay line routers mirror the coefficients in each register in the delay line along the centre register. The Serial Processor can now start computing the DWT of these coefficients. This signal is maintained for one cycle only. When the last coefficient has in input to the delay line the end of row EOR is generated. At the end of row, the counter's output signal is held for longer (usually around $L/2$ cycles depending on whether the input sequence and filter length is odd or even) to allow the router to continue to wrap around the input samples. A similar mirroring of coefficients is applied to each column in the data.

The example below illustrates the effect of this configuration on a signal 26 samples long, with coefficients identified A-Z and has an odd-length filter:

Table 1

| Coefficients Stored | Start of Row SOR | End of Row EOR |
|---|---|---|
| A _ _ _ _ _ _ _ _ _ _ | 0 | 0 |
| ... | 0 | 0 |
| D C B A _ _ _ _ _ | 0 | 0 |
| E D C B A B C D E | 1 | 0 |
| F E D C B A B C D | 0 | 0 |
| ... | 0 | 0 |
| Y X W V U T S R Q | 0 | 0 |
| Z Y X W V U T S R | 0 | 0 |
| Y Z Y X W V U T S | 0 | 1 |
| X Y Z Y X W V U T | 0 | 1 |
| W X Y Z Y X W V U | 0 | 1 |

The processors used in this particular circuit exploit both the symmetrical nature of the biorthogonal coefficients and the loss of data due to down-sampling. This is done by mirroring the coefficients before they are input to the multiply accumulate structure. The processors used in the parallel processors take advantage of the symmetry of the biorthogonal coefficients to produce a filter with $L / 2$ Multipliers. This produces a single-cycle filter, as shown in Figure 4. The filter inputs are added across the centre, for a nine tap filter, with filter inputs ranging from X0 to X8, and filter coefficients ranging from C0 to C4 then X0 and X8 are summed and multiplied by C4, X1 and X7 are summed and multiplied by C3, X2 and X6 are summed and multiplied by C2 and X3 and X5 are summed and multiplied by C1. The input X4 is multiplied by C0. The products are then summed to produce the filter output. The filters may compute either the high or low pass transform and since the biorthogonal taps are typically different lengths the filter must consist of

$$\left\lceil L_{max} \middle/ 2 \right\rceil$$

multipliers and $L_{max}-1$ adders. During processing of the shorter filter lengths, the coefficient inputs that are not to be used are set to zero.

The operation of the memory unit MEM1, when using a RAM model, is as follows. Every tap input to the filter, except for the first, has an individual memory unit consisting of $N$ samples. This memory unit stores an entire input line of the input image. The coefficients in each line propagate through the same location in each memory unit. For example, the coefficient in address 51 in the first memory unit will be stored in address 51 in the second memory unit. The address generator for this memory generates the numbers from 0 to $N$ sequentially, before restarting back at 0. Symmetric extension is achieved through the use of a routing structure at the output of the memory unit.

The memory unit MEM2 works in the same manner as MEM1, although the memory requirement may differ because not all memory used is required by the filter. In this case, the address generator generates an address from

$$\left( \sum_{j=2}^{J} N \middle/ 2^{j-2} \right) - N \ \text{to} \ \left( \sum_{j=2}^{J} N \middle/ 2^{j-1} \right).$$

Similar to MEM1, this memory consists of $L - 1$ blocks of RAM, each holding a maximum of $N$ coefficients and a coefficient in address 51 in the first memory unit, will be stored in address 51 in the second memory unit. The memory unit MEM3 acts as a row buffer for storing LL$^j$ coefficients. Since the number of coefficients is reduced by a factor of two in each dimension at each stage, MEM3 needs only to store, at most, $N / 2$ coefficients. The address generator for this memory unit operates in the range from 0 to $N/2^{j-1}$, where $j$ is the current octave. MEM3 is typically implemented in one single block, as compared with the ($L$ - 1) distributed block structure, preferred for the design of MEM1 and MEM2. **[0048]** The component count for the (9,7) and (5,3) filters specified in Part 1 of the JPEG-2000 standard is shown in Table 2, below. It has been found that this component count is comparable with known lifting-based techniques in terms of area consumed.

Table 2

|  | Multipliers | | Adders | |
|---|---|---|---|---|
|  | (9,7) | (5,3) | (9,7) | (5,3) |
| RDWT | 5 | 3 | 8 | 4 |
| CDWT | 5 | 3 | 8 | 4 |
| MDWT | 5 | 3 | 8 | 4 |

Hardware utilisation is also better than known architectures. As illustrated in Figure 3, the parallel processor RDWT and CDWT are active 100% of the time. For computation of the first octave, the parallel processor MDWT is not required and therefore the overall processor utilisation can be considered to be 100%. For the computation of the other octaves the MDWT is utilised for

$$\sum_{j=2}^{J} \frac{100}{2^{2j-1}} \%$$

of the time and therefore the overall processor utilisation is

$$\frac{200}{3} + \sum_{j=2}^{J} \frac{100}{3 * 2^{2j-1}}.$$

The embodiment can be implemented using behavioural VHDL. The clock cycle length is largely determined by the time taken for one multiplication and four additions, this being the delay of the parallel processor. In this embodiment, no pipelining has been implemented. However, it is expected that it may be possible to improve speed of operation of the architecture by employing pipelining.

**Claims**

1. An architecture component for use in performing a 2-dimensional discrete wavelet transform of 2-dimensional input data, the component comprising a memory for receiving the input signal row-by-row, a column processor for receiving output coefficients from the memory, a row processor for processing coefficients stored in the memory, in which the row processor is operative to process in parallel coefficients previously derived from one row of input data by the column processor.

2. An architecture component according to claim 1 in which the column processor generates both low-pass and high-pass filter output coefficients.

3. An architecture component according to claim 1 or 2, in which the column processor is operative to process combinations of the output coefficients in successive processing cycles.

4. An architecture component according to any preceding claim, in which the memory is configured to order coefficients stored in it into an order suitable for processing by the column processor.

5. An architecture component according to any preceding claim, in which the memory is configured to process coefficients contained in it in a manner that differs in dependence upon whether the coefficients are derived from an odd-numbered or an even-numbered row in the input data.

**6.** An architecture component according to any preceding claim, in which the row processor is configured to process data at the same rate as data is output by the column processor.

**7.** An architecture component according to any preceding claim, in which the row processor, the column processor and the memory elements are driven by a clock.

**8.** An architecture component according to claim 7, in which the row processor and the column processor are configured to process one input every clock cycle and produce an output every clock cycle.

**9.** An architecture component according to any preceding claim, further comprising a third parallel processor.

**10.** An architecture component according to claim 9 in which the third parallel processor operates to process output from the column parallel processor to generate one or more further octaves of the discrete wavelet transform.

**11.** An architecture component according to claim 9 or 10, in which the third parallel processor processes approximately 25% of coefficients produced by the column processor.

**12.** An architecture component according to any preceding claim, in which the data is extended at its borders.

**13.** An architecture component according to claim 12, in which the data is extended by symmetric extension.

**14.** An architecture component according to claim 13, in which the data is extended by zero padding.

**15.** An architecture component according to claim 13 or 14, in which the extension is performed in a memory unit of the architecture.

**16.** An architecture component according to any of claims 13 to 15 in which the extension is performed by a delay line router component.

**17.** An architecture component according to any preceding claim, in which the row processor is configured to process data at substantially twice the rate as data is output by the first memory.

**18.** An architecture component according to any preceding claim, for use in image processing according to the JPEG 2000 standard.

**19.** A method of performing a 2-dimensional discrete wavelet transform comprising processing data items in a row of data in a memory to generate a plurality of output coefficients, passing the output coefficients to a column processor, and processing the stored coefficients in a row processor to generate the transform coefficients.

**20.** A method according to claim 19, which further includes reordering the coefficients in the memory device.

**21.** A method according to claim 19 or 20, which further includes extending the data at its borders in the column processor.

**22.** A method according to any of claims 19 to 21, in which the data is extended by either one of zero padding or symmetric extension.

**23.** A method of encoding or decoding an image in accordance with the JPEG 2000 standard including a method of performing a 2-dimensional discrete wavelet transform according to claim 19.

**24.** A computer program product comprising computer useable instructions for causing a computer to perform the method of claim 19.

**25.** A computer program product comprising computer useable instructions for causing a computer to generate an architecture component as claimed in claim 1.

Input
image

MEM1

CDWT

L,H
coefficients

Delay line

RDWT

LL, LH, HL, HH
coefficients

LL
coefficients

MEM3

LL$^j$
coefficients

MUX

MEM1

Delay line

LLL, LLH; LLLLL,
LLLLH...
coefficients

MUX

MDWT

LLLL, LLLH, LLHH,
LLHL; LLLLLL LLLLLH
... coefficients

Fig 1

Fig 2

## Processor Utilisation

Fig 3

Fig 4

Fig 5